# EUROPEAN PATENT SPECIFICATION

(11) **EP 2 634 552 B1**
(45) Date of publication and mention of the grant of the patent: **08.04.2015**
(21) Application number: 12001308.1
(22) Date of filing: 28.02.2012
(51) Int. Cl.: G01K 7/16, G01L 1/22, G01L 9/02, G01D 3/08, G01D 21/02, G06F 3/041, G01K 13/00

(54) **Electronic device and method for determining a temperature of an electronic device**
Elektronische Vorrichtung und Verfahren zur Bestimmung einer Temperatur einer elektronischen Vorrichtung
Dispositif électronique et procédé permettant de déterminer la température d'un dispositif électronique

(43) Date of publication of application: 04.09.2013
(73) Proprietor: Sony Mobile Communications AB, 221 88 Lund (SE)
(72) Inventor: Åberg, Peter, 288 31 Vinslöv (SE); Knutsson, Lars, 275 95 Sjöbo (SE); Midholt, Magnus, 223 53 Lund (SE); Rosqvist, Björn, 226 54 Lund (SE)
(74) Representative: Banzer, Hans-Jörg

(56) References cited:
- JP-A- 61 034 431
- US-A1- 2010 123 686

## Description

### FIELD OF INVENTION

The present invention relates to an electronic device and a method for determining a temperature of an electronic device.

### BACKGROUND OF THE INVENTION

Touch screens are known in the art for controlling devices via a user interface. Touch-sensitive proximity sensing components may be arranged on top of a display forming a so-called touch screen. A touch screen provides a very intuitive way of operating the device. Information may be displayed on the display; in response to the information displayed on the display, the user may touch the display for initiating actions or operations. The touch screen may work by detecting a change of capacity when the user approaches or touches the surface of the touch screen. Such a so-called capacitive touch screen may also provide location information on a position where the user touches the touch screen. This may be used to provide a two-dimensional input means as the user interface. However, especially in connection with complex applications, a three-dimensional input means may be desirable. A third input dimension may be accomplished by measuring a force being applied by the user to the surface of the touch screen. A strain gauge may be used for force sensing. Using a strain gauge sensor may be very effective in measuring strain on for example a glass window created by a force applied by the user. However, strain gauge sensors are very sensitive to environmental effects such as temperature changes.

An electronic device according to the preamble of claim 1 is known from US 2010/123686 A1.

Furthermore, JP 61-034431 A discloses a strain gauge arrangement with strain gauges being arranged in legs of a Wheatstone bridge circuit. The strain gauge arrangement can be modified to function as a thermometer by short-circuiting a part of the strain gauges and adding complementary resistors.

It is desirable to measure temperature changes and pure temperature on surfaces on for example an electronic device with for example a strain gauge if the caused strain is not influenced by any force.

There is a need to provide a simple, cheap, reliable and robust way of measuring a temperature change or pure temperature on electronic devices.

### SUMMARY OF THE INVENTION

According to the present invention, this object is achieved by an electronic device as defined in claim 1 and a method for determining a temperature of an electronic device as defined in claim 9. The dependent claims define preferred or advantageous embodiments of the invention.

According to an aspect of the present invention, an electronic device is provided. The electronic device has at least one strain gauge which is arranged at the electronic device such that a strain of the at least one strain gauge is influenced by a change of a temperature of the electronic device. Further, the electronic device has a control assembly for evaluating an output signal of the at least one strain gauge to determine a temperature of the electronic device on the basis of the output signal and for controlling at least one function of the electronic device based on the determined temperature. According to the invention, the at least one strain gauge is part of a force detection arrangement of the electronic device. The force detection arrangement is provided for detecting a force exerted on the electronic device. Further, the force detection arrangement may be adapted to detect a force exerted on a touch screen of the electronic device.

According to an embodiment, the at least one strain gauge may be arranged such that the strain of the at least one strain gauge is influenced by a change of a temperature of a display or a touch screen of the electronic device. The control assembly may be adapted to determine the temperature of the display or touch screen of the electronic device and to control the at least one function of the electronic device based on the determined temperature of the display or touch screen of the electronic device.

According to an embodiment, the at least one strain gauge comprises indium tin oxide. The indium tin oxide (ITO) may be coated on a glass surface in a thin layer for example in the form of a meander for realizing a strain gauge sensor configured to detect a strain on the glass window created by a force or created by a temperature on the glass window. As a thin layer of indium tin oxide has a high transparency, the constituted strain gauge sensor may be arranged on a top of a display for constituting a touch screen of a user interface. The layer of indium tin oxide may be overlaid onto the display such that the light output by the display process through the strain gauge sensor. If the material is coated outside the display area, there are several different materials to choose from.

According to an embodiment, the at least one strain gauge is arranged in a leg of a Wheatstone bridge circuit. The Wheatstone bridge may be adapted to determine a resistance and changes in a resistance very accurately, especially if the changes are very small. Thus the sensor value may be determined with high accuracy.

According to an embodiment, the at least one strain gauge is arranged at a surface region of the electronic device such that the strain of the at least one strain gauge is influenced by a change of a temperature at the surface region of the electronic device.

According to an embodiment, the at least one function of the electronic device is a function of a heat management system of the electronic device. The heat management system can arrange to clock down or even shut down the electronic device in order not to exceed internal temperature limits and temperature limits on the electronic device surface or charging of the electronic device can be stopped.

According to an embodiment, the electronic device is a mobile device selected from a group consisting of a mobile phone, a personal digital assistant, a mobile music player, a mobile computer, a tablet computer, and a mobile navigation system.

According to another aspect of the invention, a method for determining a temperature of an electronic device is provided. According to the method, at least one strain gauge is arranged at the electronic device such that a strain of the at least one strain gauge is influenced by a change of a temperature of the electronic device. The at least one strain gauge is part of a force detection arrangement of the electronic device. An output signal of the at least one strain gauge is evaluated to determine a temperature of the electronic device on the basis of the output signal.

The method may be performed using the above-described electronic device of any aspect or embodiment.

Although specific features described in the above summary and in the following detailed description are described in connection with specific embodiments and aspects, it is to be understood that the features of the embodiments and aspects may be combined with each other unless specifically noted otherwise.

### BRIEF DESCRIPTION OF THE DRAWINGS

The invention will now be described in more detail with reference to the accompanying drawings.
Fig. 1 shows schematically a mobile device according to an embodiment of the present invention.
Fig. 2 shows an electronic device comprising a Wheatstone bridge according to an embodiment of the invention.
Fig. 3 shows method steps of a method according to an embodiment of the present invention.

### DETAILED DESCRIPTION OF PREFERRED EMBODIMENTS

In the following, exemplary embodiments of the invention will be described in more detail. It has to be understood that the following description is given only for the purpose of illustrating the principles of the invention and is not to be taken in a limiting sense. Rather, the scope of the invention is defined only by the appended claims and is not intended to be limited by the exemplary embodiments hereinafter.

It is to be understood that the features of the various exemplary embodiments described herein may be combined with each other unless specifically noted otherwise.

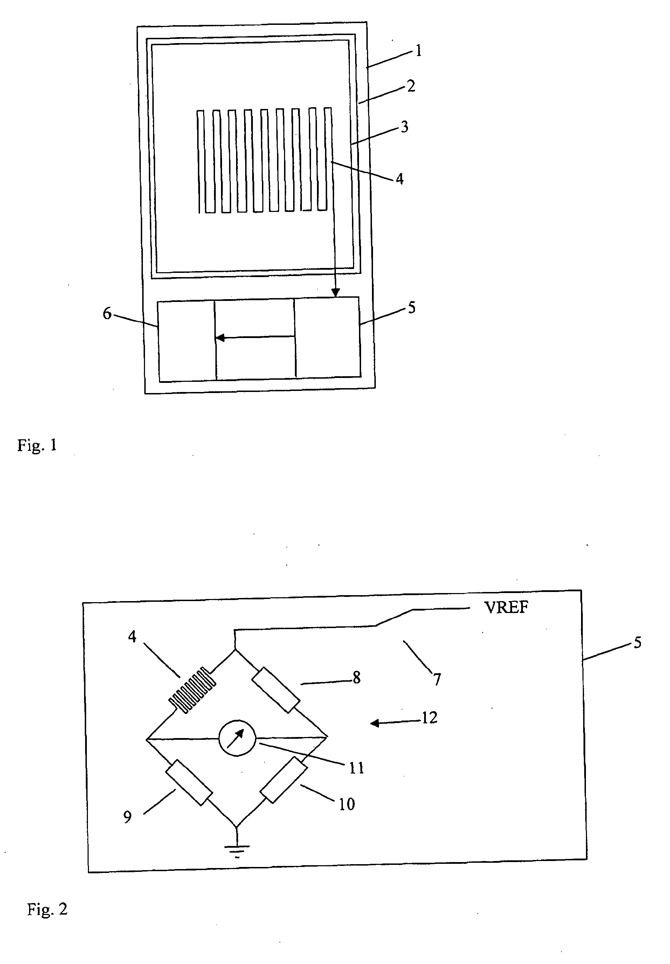

Fig. 1 shows an electronic device 1, for example a mobile phone. The electronic device 1 comprises among other parts (not shown) a display 2 and a touch screen 3 which is arranged on top of the display 2. The touch screen 3 may comprise a glass window and an array or grid of electrodes (not shown) for detecting that a user's finger approaches a certain position on the touch screen 3. Capacitive sensing may be performed, such that spatially resolved touch sensing is realized by electing a change of capacitance of electrodes as it is known in the art.

Furthermore, the touch screen 3 comprises at least one strain gauge sensor 4 arranged on a surface of the touch screen 3. The at least one strain gauge sensor 4 is part of a force detection arrangement of the electronic device 1. The force detection arrangement is provided for detecting a force exerted on the electronic device 1, especially a force exerted on a touch screen 2 of the electronic device 1. The strain gauge sensor 4 may comprise a layer of indium tin oxide. The strain gauge sensor 4 may be coated or laminated on the surface of the touch screen 3. The strain gauge sensor 4 may comprise an electric meander line as shown in Fig. 1 or an electric line of any other shape appropriate to detect a strain on the touch screen 3. If there is no force causing a strain of the strain gauge sensor 4, the strain of the strain gauge sensor 4 is created by a temperature or temperature change. The at least one strain gauge sensor 4 is arranged such that the strain of the at least one strain gauge 4 is influenced by a change of a temperature of the display 2 or the touch screen 3. The strain gauge sensor 4 may be formed as a trace of a suitable material, such as indium tin oxide. Conductive lines may be provided to connect portions of the strain gauge sensor 4 to a control assembly 5. For illustration, an end or both ends of the trace forming the strain gauge sensor 4 may be connected to the control assembly 5.

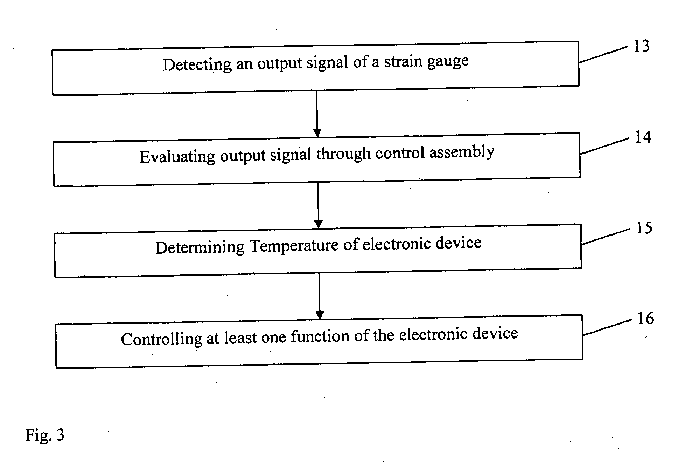

Operation of the control assembly 5 will be now described with reference to Figs. 1 and 3.

Fig. 3 is a flow chart of a method of an embodiment. The at least one strain gauge 4 is implemented in an electronic device 1 for determining a strain created by a change of temperature of the electronic device 1. The change of temperature gives rise to an output signal of the at least one strain gauge 4. The change of temperature is detected by the control assembly 5 (Step 13). The control assembly 5 further evaluates the output signal of the at least one strain gauge 4 and determines the temperature of the electronic device on the basis of the output signal (step 15, step 16). The determined temperature is used to control at least one function of the electronic device 1 based on the temperature (step 16). The at least one function of the electronic device 1 is a function of a heat management system 6 of the electronic device 1. The at least one function of the heat management system 6 may comprise that the electronic device 1 is clocked or finally shut down if the electronic device 1 gets too hot, in order not to exceed internal temperature limits but also not to exceed temperature limits on the surface of the electronic device 1.

The electronic device 1 may be a mobile device selected from a group consisting of a mobile phone, a personal digital assistant, a mobile music player, a mobile computer, a tablet computer, and a mobile navigation system.

One function of the electronic device can be measuring a strain caused by a force. In Fig. 2, an embodiment for determining the resistance of the strain gauge sensor 4 using a Wheatstone bridge 12 is shown. A strain gauge sensor 4 is provided in at least one leg, in particular in each of a plurality of legs of a Wheatstone bridge 12. The other legs of the Wheatstone bridge 12 comprise resistors 8, 9, 10. As shown in Fig. 2, in at least one leg of the Wheatstone bridge 12 a strain gauge sensor 4 is coupled. The Wheatstone bridge 12 can be selectively supplied with a reference voltage VREF. The resistance of the strain gauge sensor 4 may be determined by the Wheatstone bridge 12 using conventional techniques, for example by balancing resistors (not shown) such that a voltage measured at a voltage measuring unit (not shown) becomes zero. Alternatively or additionally the resistance of the strain gauge sensor 4 may be determined based on the voltage indicated by the voltage measuring unit (not shown). The material of the strain gauge sensor 4, for example an indium tin oxide (ITO) material, follows different curves of resistance versus temperature and strain when being supplied with different supply voltages. Thus, there are two unknown parameters, the strain and the temperature. Due to the two measurements at different electrical supply voltages, both of these two unknown parameters can be determined. In particular, by evaluating the resistances measured for two supply voltages, resistance changes caused by a temperature change may be discriminated from resistance changes causes by a force applied onto the touch screen 3. Based on the characteristic dependencies of the at least one strain gauge sensor 4 indicating the resistance of the strain gauge sensor versus temperature, a temperature can be determined, if there is no strain change caused by a force. The read strain gauge value is compared to a known base-line and further the temperature can be calculated.

While exemplary embodiments have been described above, various modifications may be implemented in other embodiments. For example, the pattern and position of the strain gauge sensor 4 may have a shape other than the shape shown in Fig. 1, for example a zigzag shape. Furthermore, the characteristic dependencies indicating the change of temperature of the strain gauge sensor 4 may be implemented as a characteristic diagram, a look-up table or a mathematical formula.

Finally, it is to be understood that various modifications of the embodiments described above are considered to be comprised by the present invention as it is defined by the appended claims.

## Claims

1. An electronic device (1) comprising:
at least one strain gauge (4) arranged at the electronic device (1) such that a strain of the at least one strain gauge (4) is influenced by a change of a temperature of the electronic device (1), wherein the at least one strain gauge (4) is part of a force detection arrangement of the electronic device (1), the force detection arrangement being provided for detecting a force exerted on the electronic device (1), and
a control assembly (5) for evaluating an output signal of the at least one strain gauge (4),
**characterized in that**
the control assembly (5) is configured to evaluate the output signal of the at least one strain gauge (4) to determine (15) a temperature of the electronic device (1) on the basis of the output signal and to control (16) at least one function of the electronic device (1) based on the determined temperature.

2. The electronic device (1) according to claim 1,
wherein the force detection arrangement is adapted to detect a force exerted on a touch screen (2) of the electronic device.

3. The electronic device (1) according to any one of claims 1-2,
wherein the at least one strain gauge (4) is arranged such that the strain of the at least one strain gauge (4) is influenced by a change of a temperature of a display (2) or a touch screen (3) of the electronic device (1); and
wherein the control assembly (5) is adapted to determine the temperature of the display (2) or the touch screen (3) of the electronic device (1) on the basis of the output signal of the at least one strain gauge (4) and controls the at least one function of the electronic device (1) based on the determined temperature of the display (2) or touch screen (3) of the electronic device (1).

4. The electronic device (1) according to any one of the claims 1-3,
wherein the at least one strain gauge (4) arranged on the surface of the display (2) comprises a transparent material, wherein the transparent material is indium tin oxide.

5. The electronic device (1) according to any one of claims 1-4,
wherein the at least one strain gauge (4) is arranged in a leg of a Wheatstone bridge circuit (12).

6. The electronic device (1) according to any one of claims 1-5,
wherein the at least one strain gauge (4) is arranged at a surface region of the electronic device (1) such that the strain of the at least one strain gauge (4) is influenced by a change of a temperature at the surface region of the electronic device (1).

7. The electronic device (1) according to any one of claims 1-6,
wherein the at least one function of the electronic device (1) is a function of a heat management system (6) of the electronic device (1).

8. The electronic device (1) according to any one of claim 1-7,
wherein the electronic device (1) is a mobile device selected from a group consisting of a mobile phone, a personal digital assistant, a mobile music player, a mobile computer, a tablet computer, and a mobile navigation system.

9. A method for determining a temperature of an electronic device, comprising the steps:
arranging at least one strain gauge at the electronic device (1) such that a strain of the at least one strain gauge (4) is influenced by a change of a temperature of the electronic device (1), wherein the at least one strain gauge (4) is part of a force detection arrangement of the electronic device (1), the force detection arrangement being provided for detecting a force exerted on the electronic device (1), and
evaluating (14) an output signal of the at least one strain gauge (4) to determine (15) a temperature of the electronic device (1) on the basis of the output signal (13).

10. The method according to claim 9,
further comprising the step of using the electronic device (1) according to any one of claims 1-8.

## Patentansprüche

1. Elektronische Vorrichtung (1) umfassend:
mindestens einen Dehnungsmesser (4), welcher an der elektronischen Vorrichtung (1) derart angeordnet ist, dass eine Dehnung von dem mindestens einen Dehnungsmesser (4) durch eine Änderung einer Temperatur der elektronischen Vorrichtung (1) beeinflusst wird, wobei der mindestens eine Dehnungsmesser (4) ein Teil einer Krafterfassungsanordnung der elektronischen Vorrichtung (1) ist, wobei die Krafterfassungsanordnung zum Erfassen einer Kraft vorgesehen ist, welche auf die elektronische Vorrichtung (1) ausgeübt wird, und
eine Steueranordnung (5) zum Auswerten eines Ausgangssignals des mindestens einen Dehnungsmessers (4),
**dadurch gekennzeichnet, dass**
die Steueranordnung (5) ausgestaltet ist, das Ausgangssignal des mindestens einen Dehnungsmessers (4) auszuwerten, um eine Temperatur der elektronischen Vorrichtung (1) auf der Grundlage des Ausgangssignals zu bestimmen (15) und um mindestens eine Funktion der elektronischen Vorrichtung (1) basierend auf der bestimmten Temperatur zu steuern (16).

2. Elektronische Vorrichtung (1) nach Anspruch 1,
wobei die Krafterfassungsanordnung ausgestaltet ist, eine Kraft zu erfassen, welche auf einen berührungssensitiven Bildschirm (2) der elektronischen Vorrichtung ausgeübt wird.

3. Elektronische Vorrichtung (1) nach einem der Ansprüche 1-2,
wobei der mindestens eine Dehnungsmesser (4) derart angeordnet ist, dass die Dehnung des mindestens einen Dehnungsmessers (4) durch eine Änderung einer Temperatur einer Anzeige (2) oder eines berührungssensitiven Bildschirms (3) der elektronischen Vorrichtung (1) beeinflusst wird; und
wobei die Steueranordnung (5) ausgestaltet ist, die Temperatur der Anzeige (2) oder des berührungssensitiven Bildschirms (3) der elektronischen Vorrichtung (1) auf der Grundlage des Ausgangssignals des mindestens einen Dehnungsmessers (4) zu bestimmen, und die mindestens eine Funktion der elektronischen Vorrichtung (1) basierend auf der bestimmten Temperatur der Anzeige (2) oder des berührungssensitiven Bildschirms (3) der elektronischen Vorrichtung (1) steuert.

4. Elektronische Vorrichtung (1) nach einem der Ansprüche 1-3,
wobei der mindestens eine Dehnungsmesser (4), welcher auf der Fläche der Anzeige (2) angeordnet ist, ein transparentes Material umfasst, wobei das transparente Material Indiumzinnoxid ist.

5. Elektronische Vorrichtung (1) nach einem der Ansprüche 1-4,
wobei der mindestens eine Dehnungsmesser (4) in einem Zweig eines Wheatstone-Brücken-Schaltkreises (12) angeordnet ist.

6. Elektronische Vorrichtung (1) nach einem der Ansprüche 1-5,
wobei der mindestens eine Dehnungsmesser (4) an einem Flächenbereich der elektronischen Vorrichtung (1) derart angeordnet ist, dass die Dehnung des mindestens einen Dehnungsmessers (4) durch eine Änderung einer Temperatur an dem Flächenbereich der elektronischen Vorrichtung (1) beeinflusst wird.

7. Elektronische Vorrichtung (1) nach einem der Ansprüche 1-6,
wobei die mindestens eine Funktion der elektronischen Vorrichtung (1) eine Funktion eines Wärmeverwaltungssystems (6) der elektronischen Vorrichtung (1) ist.

8. Elektronische Vorrichtung (1) nach einem der Ansprüche 1-7,
wobei die elektronische Vorrichtung (1) eine mobile Vorrichtung ist, welche ausgewählt ist aus einer Gruppe, welche aus einem Mobiltelefon, einem persönlichen digitalen Assistenten, einer mobilen Musikwiedergabevorrichtung, einem mobilen Computer, einem Tablet-Computer und einem mobilen Navigationssystem besteht.

9. Verfahren zum Bestimmen einer Temperatur einer elektronischen Vorrichtung, umfassend die Schritte:
Anordnen von mindestens einem Dehnungsmesser an der elektronischen Vorrichtung (1) derart, dass eine Dehnung des mindestens einen Dehnungsmessers (4) durch eine Änderung einer Temperatur der elektronischen Vorrichtung (1) beeinflusst wird, wobei der mindestens eine Dehnungsmesser (4) ein Teil einer Krafterfassungsanordnung der elektronischen Vorrichtung (1) ist, wobei die Krafterfassungsanordnung zum Erfassen einer Kraft vorgesehen ist, welche auf die elektronische Vorrichtung (1) ausgeübt wird, und
Auswerten (14) eines Ausgangssignals des mindestens einen Dehnungsmessers (4), um eine Temperatur der elektronischen Vorrichtung (1) auf der Grundlage des Ausgangssignals (13) zu bestimmen (15).

10. Verfahren nach Anspruch 9,
ferner umfassend den Schritt eines Verwendens der elektronischen Vorrichtung (1) nach einem der Ansprüche 1-8.

## Revendications

1. Dispositif électronique (1) comprenant :
au moins une jauge de contrainte (4) disposée sur le dispositif électronique (1) de façon qu'une déformation de l'au moins une jauge de contrainte (4) soit influencée par une variation d'une température du dispositif électronique (1), dans lequel l'au moins une jauge de contrainte (4) fait partie d'un montage de détection de force du dispositif électronique (1), le montage de détection de force étant prévu pour détecter une force exercée sur le dispositif électronique (1), et
un ensemble de commande (5) pour évaluer un signal de sortie de l'au moins une jauge de contrainte (4),
**caractérisé en ce que**
l'ensemble de commande (5) est configuré pour évaluer le signal de sortie de l'au moins une jauge de contrainte (4) afin de déterminer (15) une température du dispositif électronique (1) sur la base du signal de sortie et pour commander (16) au moins une fonction du dispositif électronique (1) sur la base de la température déterminée.

2. Dispositif électronique (1) selon la revendication 1,
dans lequel le montage de détection de force est apte à détecter une force exercée sur un écran tactile (2) du dispositif électronique.

3. Dispositif électronique (1) selon l'une quelconque des revendications 1-2,
dans lequel l'au moins une jauge de contrainte (4) est disposée de façon que la déformation de l'au moins une jauge de contrainte (4) soit influencée par une variation d'une température d'un afficheur (2) ou d'un écran tactile (3) du dispositif électronique (1) ; et
dans lequel l'ensemble de commande (5) est apte à déterminer la température de l'afficheur (2) ou de l'écran tactile (3) du dispositif électronique (1) sur la base du signal de sortie de l'au moins une jauge de contrainte (4) et commande l'au moins une fonction du dispositif électronique (1) sur la base de la température déterminée de l'afficheur (2) ou de l'écran tactile (3) du dispositif électronique (1).

4. Dispositif électronique (1) selon l'une quelconque des revendications 1 à 3,
dans lequel l'au moins une jauge de contrainte (4) disposée sur la surface de l'afficheur (2) comprend un matériau transparent, dans lequel le matériau transparent est l'oxyde d'indium et d'étain.

5. Dispositif électronique (1) selon l'une quelconque des revendications 1 à 4,
dans lequel l'au moins une jauge de contrainte (4) est disposée dans une branche d'un circuit en pont de Wheatstone (12).

6. Dispositif électronique (1) selon l'une quelconque des revendications 1 à 5,
dans lequel l'au moins une jauge de contrainte (4) est disposée dans une région de surface du dispositif électronique (1) de façon que la déformation de l'au moins une jauge de contrainte (4) soit influencée par une variation d'une température dans la région de surface du dispositif électronique (1).

7. Dispositif électronique (1) selon l'une quelconque des revendications 1 à 6,
dans lequel l'au moins une fonction du dispositif électronique (1) est une fonction d'un système de gestion de la chaleur (6) du dispositif électronique (1).

8. Dispositif électronique (1) selon l'une quelconque des revendications 1 à 7,
dans lequel le dispositif électronique (1) est un dispositif mobile choisi dans le groupe constitué d'un téléphone mobile, d'un assistant numérique personnel, d'un lecteur de musique portable, d'un ordinateur portable, d'un ordinateur tablette, et d'un système de navigation mobile.

9. Procédé pour déterminer une température d'un dispositif électronique, comprenant les étapes consistant à :
agencer au moins une jauge de contrainte sur le dispositif électronique (1) de façon qu'une déformation de l'au moins une jauge de contrainte (4) soit influencée par une variation d'une température du dispositif électronique (1), dans lequel l'au moins une jauge de contrainte (4) fait partie d'un montage de détection de force du dispositif électronique (1), le montage de détection de force étant prévu pour détecter une force exercée sur le dispositif électronique (1), et
évaluer (14) un signal de sortie de l'au moins une jauge de contrainte (4) afin de déterminer (15) une température du dispositif électronique (1) sur la base du signal de sortie (13).

10. Procédé selon la revendication 9,
comprenant en outre l'étape consistant à utiliser le dispositif électronique (1) selon l'une quelconque des revendications 1 à 8.
